# EUROPEAN PATENT APPLICATION

(11) **EP 1 559 644 A2**
(43) Date of publication of application: **03.08.2005**
(21) Application number: 05445004.4
(22) Date of filing: 24.01.2005
(51) Int. Cl.: B62J 39/00

(54) **Lifting handle especially for bicycles**

(30) Priority: 30.01.2004 SE 0400189
(71) Applicant: Bergman, Anders, 116 30 Stockholm (SE); Collins, Robin, 167 40 Bromma (SE)
(72) Inventor: Bergman, Anders, 116 30 Stockholm (SE); Collins, Robin, 167 40 Bromma (SE)
(74) Representative: Strandin, Heléne

(57) **Abstract**

The invention concern a lifting handle especially adapted for bicycles and comprising a fixing part (2) for releasable fixing to a tube part (3) and a handle (4) pivotally articulated at the fixing part (2). The fixing part (2) shows a protrusion (6) provided with a pivot pin protruding from an abutment portion (5) cooperating with the tube part (3), over and around its pivot pin (7) the handle (4) is mountable and after full mounting pivotably arranged from a resting position along the tube part (3) in question to a using or functional position in a angled position out from the tube portion (3).

## Description

The present invention relates to a lifting handle which is specially adapted for bicycles and which comprises a fixing part for releasable mounting to a tube part and a handle pivotably connected to the fixing part.

The lifting handles which today are common on the market are integrally designed with the bicycle or the vehicle in question or the two wheel vehicle which is intended to be lifted and this type of handles are spring biased in a way so that when they are not in use the lie parallel with the tube part of the vehicle which it is fixed to and when it is to be lifted said handle is swingable upwards against the bias of the spring to a substantially horizontal position, whereafter the bicycle may be lifted by manual power.

The object of the present invention is now to provide a new type of lifting handle for especially bicycles and the like two wheel vehicles where the lifting handle is mountable later on, i.e. is mobile, and which may be fastened on a suitable position on a tube part without free ends and then preferably at a position on the tube part which is centrally positioned in order to achieve a balance when lifting. The characterising features of the invention are given in the following claims.

Thanks to the invention a mobile lifting handle especially for bicycles is now provided, which in an excellent way fulfils its purposes at the same time as it is inexpensive to manufacture as well. Thanks to the flexibility of the lifting handle and its fixing arrangement it may be fixed to tube parts of different dimensions and the lifting handle moreover shows few parts without sprint and is after the fixing self locking. Further the fixing means used for fixation of the lifting handle at the frame part of the bicycle is adjustable without protruding parts.

The invention will be described in more detail by means of a preferred embodiment with reference to enclosed drawings, in which
- Fig. 1: shows a schematic perspective view of a lifting handle according to the invention fixed to a tube part of preferably a bicycle,

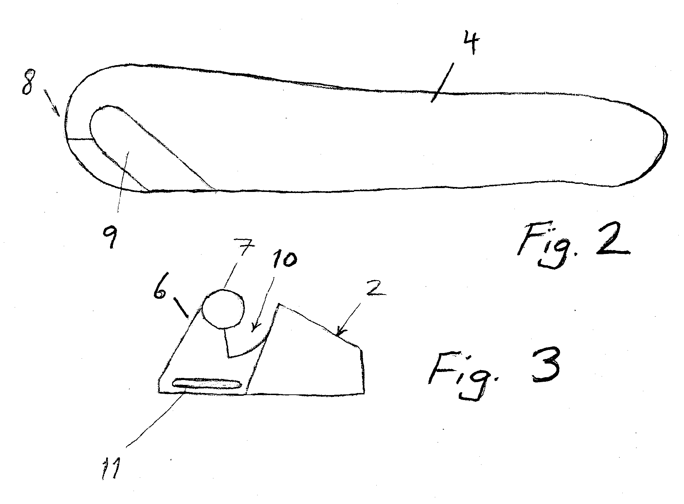

- Fig. 2: shows a schematic side sectional view of the handle itself,

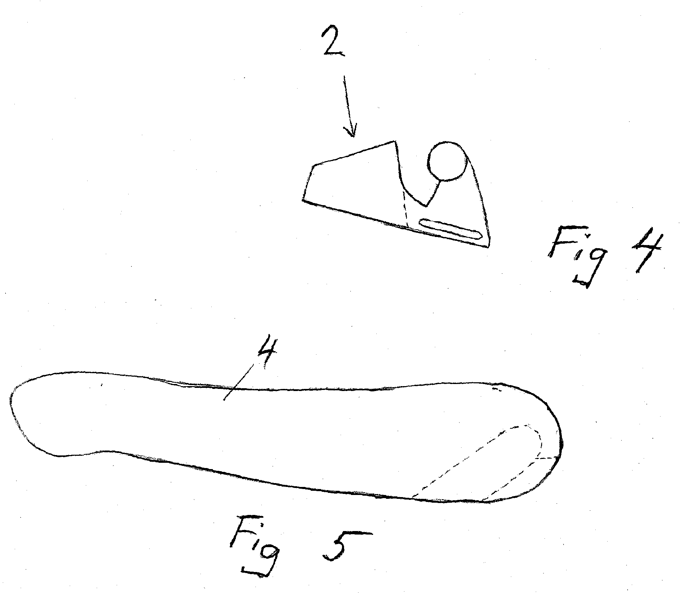

- Fig. 3: shows a schematic side view of a fixing part which is adapted to cooperate with the handle and which keeps the whole lifting handle fixed to the tube part by means of an adjustable fixing means,
- Fig.4: shows a schematic sideview from the other side of the fixing part,
- Fig. 5: shows a side view from the other side of the handle of Fig. 2, and
- Fig. 6: shows three schematic views of the fixing means which is used in order to fix the fixing part to the tube part and which fixing means is adjustable to tube parts of different dimensions.

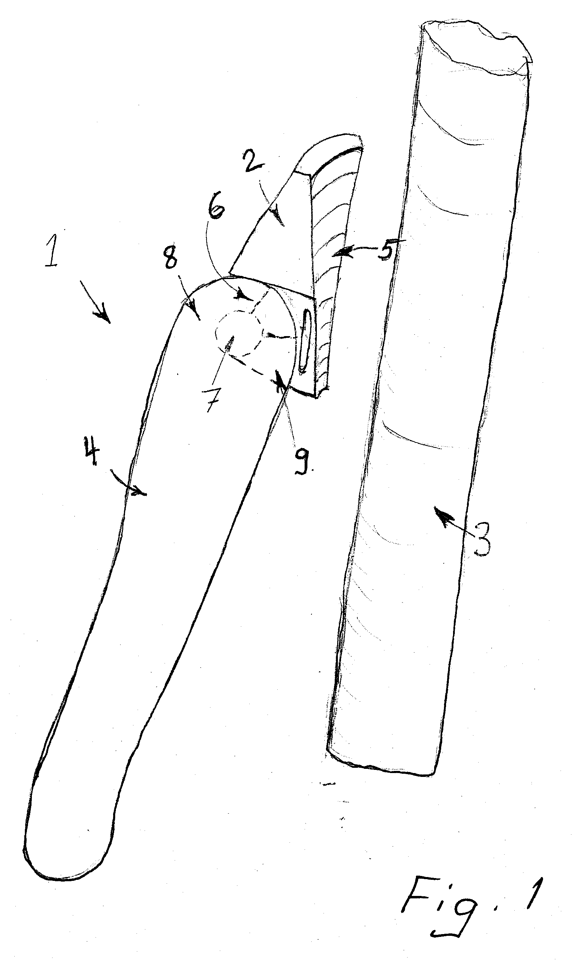

As in greater detail emerges from Fig. 1 a preferred embodiment of a lifting handle 1 of the invention is shown, which is especially adapted for bicycles and which comprises a fixing part 2 for releasable fixing to a tube part 3. A handle 4, pivotally articulated at the fixing part 2, is mountable in the unfixed position to the fixing part 2 for pivotable articulation around the same. The fixing part 2 thus shows a protrusion 6 provided with a pivot pin protruding from an abutment portion 5 which is conically formed and cooperating with the tube part 3. A pivot pin 7 present on the protrusion 6 is adapted to take up the handle 4 and after the mounting of the handle 4 over the pivot pin 7 it is pivotable around it from a resting position along the tube part 3 in question to a using or functional position in an angled position out from the tube part 3.

The protrusion 6 provided with a pivot pin is with its pivot pin 7 adapted to take up the handle 4 after the fixing of the lifting handle 1 to the tube part 3 at the same time as it shows a hook formation 8, which is partly delimited by a groove counter sink 9 whose width and depth substantially corresponds to the diameter and thickness of the pivot pin 7. After the mounting of the handle 4 to the fixing part 2 the whole lifting handle 1 is thus adapted to be fixed to the tube part 3 and after this fixing the handle is no longer releasable from the fixing part 2.

The fixing part 2 shows a centrally arranged recess 10 whose bending corresponds to and is adapted to cooperate with the hook formation 8 of the handle 4 when upwardly pivoting the handle 4 to its using position. The bent recess 10 of the fixing part 2 is this adapted to cooperate with the hook formation 8 of the handle 4 and the depth of the recess 10 in the fixing part 2 is adapted to receive the hook formation 8 fully for positional fixing of the handle 4 in an upwardly pivoted, predetermined angle, which corresponds to the using position of the handle 4, which is substantially horizontal. The fixing part 2 shows in the vicinity of the abutment portion 5 a through going slot 11 for cooperation with a fixing means 12 which comprises an adjustable strap 13, which fixes the fixing part 2 to the tube part 3.

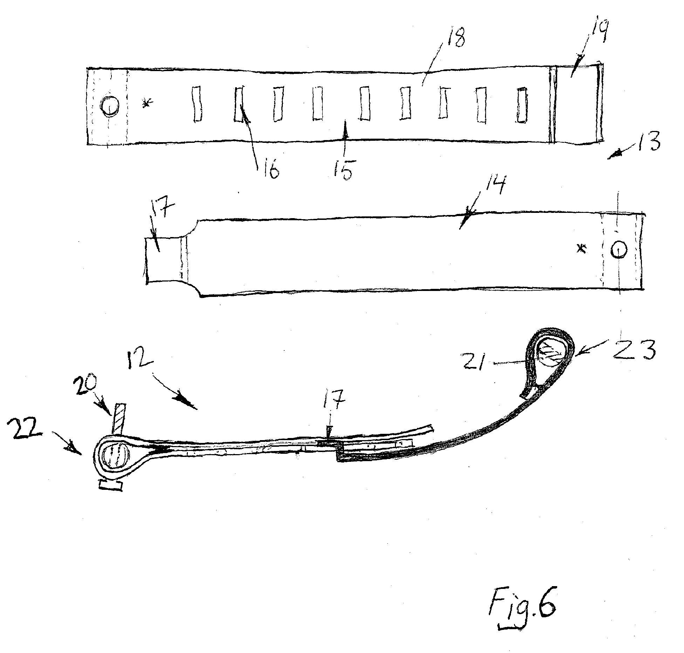

The fixing means 12, as is evident from Fig. 6, is a strap 13, which is divided in two and adjustably settable relative the dimension of the tube part 3 in question. The strap 13 thus comprises two main parts, namely a first strap part 14 and a second strap part 15, which are lockably cooperating with each other in order to fix the fixing means so that they can be applicable to different tube part dimensions. The strap parts 14, 15 are thus adapted to cooperate with the slot 11 in the fixing part 2 and are by means of the conically designed abutment portion 5 of the fixing part 2 fixable in a suitable position at the tube portion 3.

Both of the strap parts 14 and 15 are thus adjustably cooperatable with each other by means of a locking tongue 17 present on the first strap part 14, which tongue in turn is adapted to lock in a selectable position along the second strap part 15 in locking holes 16 present after each other at predetermined distances. In order to protect the outer mantle surface of the tube part 3 the second strap part 15 comprises two parts, namely a first part 18, which shows the holes 16 and a second, underlying part 19, which latter is adapted to directly abut the tube part 3 and protect it from fixing marks, when the locking tongue 17 is fixed in position in desired locking hole 16. As is shown in more detail in the lower part of Fig. 6, both of the strap parts 14 and 15 are in fixed position relative each other and here it shows in more detail that the locking tongue 17 is present in its locking position in a locking hole 16 and that the locking tongue 17 then is positioned between the second part 19 and the first part 18 of the second strap part 15. Before the fixation of the fixing means 12 at the tube part 3 there are present locking means in the form of a fixing screw 20 and a fixing nut 21 cooperating with the screw 20 arranged at the outer ends 22 and 23 of the strap parts 14 and 15. By means of the design of the fixing means 12 it is now provided a great opportunity to change the circumference without any protruding parts. The fixing means 12 may also be supplemented with a rubber strip in order not to damage the paint work at the tube part 3 and thus further protect the paintwork at the tube part 3.

## Claims

1. A lifting handle especially adapted for bicycles and comprising a fixing part (2) for releasable fixing to a tube part (3) and a handle (4) pivotally articulated at the fixing part (2), **characterised in that** the fixing part (2) shows a protrusion (6) provided with a pivot pin protruding from an abutment portion (5) cooperating with the tube part (3), over and around its pivot pin (7) the handle (4) is mountable and after full mounting pivotably arranged from a resting position along the tube part (3) in question to a using or functional position in a angled position out from the tube portion (3).

2. A lifting handle according to claim 1, **characterised in that** the protrusion (6) provided with a pivot pin is with its pivot pin (7) adapted to receive the handle (4) at the same time as it shows a hook formation (8), which is delimited partly by a groove counter sink (9), whose width and depth substantially corresponds to the diameter and thickness of the pivot pin (7).

3. A lifting handle according to claim 1 or 2, **characterised in that** the fixing part (2) shows a centrally provided recess (10), whose bending corresponds to and is adapted to cooperate with the hook formation (8) of the handle (4) when the handle (4) is pivoted upwards to its using position.

4. A lifting handle according to claim 1 or 3, **characterised in that** the bent recess (10) of the fixing part (2) is adapted to cooperate with the hook formation (8) of the handle (4), which depth of the recess (10) in the fixing part (2) receives the hook formation (8) fully and locks the position of the handle (4) in a predetermined angle, which corresponds to the using position of the handle (4), which substantially is horizontal.

5. A lifting handle according to any one of the previous claims, **characterised in that** the fixing part (2) in the vicinity of the abutment portion (5) shows a throughgoing slot (11) for cooperation with locking means (12) for fixation of the fixing part (2) to the tube part (3).

6. A lifting handle according to claim 5, **characterised in that** the throughgoing slot (11) has a thickness and a width which substantially corresponds to the fixing means (12) comprising strap parts (14,15), which are fixably connectable with each other in order to allow fixation of the fixing part (2) on tube parts (3) of different dimensions.

7. A lifting handle according to claim 5 or 6, **characterised in that** the strap arts (15,15) making up the fixing means (12) are lockably cooperatable with each other by means of a locking tongue (17) on the first strap part (14), which is adapted for cooperation with locking holes (16) provided in the second strap part (15).

8. A lifting handle according to claim 7, **characterised in that** the second strap part (15) comprises a first part (18) and a second part (19), between which the locking tongue (17) is adapted to be locked after its position is locked in any of the locking holes (16) at the same time as the end portion (22,23) of the strap parts (14, 15) shows a fixing screw (20) and a fixing nut (21), respectively, for locking of the fixing part (2) by means of the fixing means (12) at the tube part (3) in question.
